# EUROPÄISCHE PATENTSCHRIFT

(11) **EP 3 566 980 B1**
(45) Veröffentlichungstag und Bekanntmachung des Hinweises auf die Patenterteilung: **19.02.2025**
(21) Anmeldenummer: 19162718.1
(22) Anmeldetag: 14.03.2019
(51) Int. Cl.: B65G 21/20, B65G 47/51

(54) **FORMATTEIL ZUM UMLENKEN VON BEHÄLTERN**
FORMAT SECTION FOR GUIDING CONTAINERS
PIÈCE DE FORMAT DESTINÉE AU TRANSFERT DE RÉCIPIENTS

(30) Priorität: 19.04.2018 DE 102018205981
(43) Veröffentlichungstag der Anmeldung: 13.11.2019
(73) Patentinhaber: KRONES Aktiengesellschaft, 93073 Neutraubling (DE)
(72) Erfinder: Schuesslburner, Helmut, 93073 Neutraubling (DE); Senn, Konrad, 93073 Neutraubling (DE)
(74) Vertreter: Grünecker Patent- und Rechtsanwälte PartG mbB

(56) Entgegenhaltungen:
- EP-A1- 1 840 051
- EP-A1- 3 625 154
- WO-A1-2018/213827
- DE-A1- 102013 105 431
- FR-A1- 2 895 382
- JP-U- S5 922 218
- JP-U- S61 193 919
- US-A- 3 767 027

## Beschreibung

Die Erfindung bezieht sich auf ein Formatteil zum Umlenken von Behältern.

Bei Behandlung oder Verarbeitung von Behältern werden diese typischerweise zwischen Behälterbehandlungsstationen oder Verarbeitungsstationen befördert, beispielsweise über Transportbänder, sonstige Förderer, Transfersterne, glatte Flächen und ähnliches. Sollen nun mit einer Behälterbehandlungsvorrichtung oder Verarbeitungsstationen Behälter verschiedener Formate behandelt oder solche transportiert werden, muss typischerweise eine Anpassung der Transporteinrichtungen an das jeweilige Behälterformat erfolgen. Solche Umrüstungen erfordern typischerweise ein Stillstehen der Anlage, und kosten daher Zeit und Geld.

Insbesondere bei Bauteilen zum Umlenken von Behältern wird oft das jeweilige Bauteil ganz ausgetauscht, wenn das Behälterformat gewechselt wird. Solch ein Austauschen von Teilen ist jedoch zeitaufwendig.

Ebenfalls aus dem Stand der Technik bekannt sind Formatteile zum Führen von Behältern aller Behälterbehandlungsanlage, beispielsweise aus der DE 10 2013 10531 A1, wobei diese Formatteile auf verschiedene Behältergrößen einstellbar sind, wobei die Einstellung über eine Einstellung eines Abstands zwischen einem ersten und zweiten Formatteilelement erfolgt. Dieser Abstand ist in der DE 10 2013 10531 A1 senkrecht zum Geländer und der Bewegungsrichtung von Behältern einstellbar.

Aus der WO 2011/139577, der WO 2005/123553 und der FR 2 937 619 sind ebenfalls Bauteile zum Umlenken von Gegenständen bekannt, deren Einstellung auf verschiedene Formate von transportierten Gegenständen anpassbar sind.

JP S61 193919 U und JP S59 22218 U offenbaren Formatteile mit einem Kniegelenk und Fußgelenken.

DE 10 2013 105 431 A1 offenbart ein Formatteil zum Führen von Behältern mit einem ersten Formatteilelement und einem zu dem ersten senkrecht beabstandeten zweiten Formatteilelement, wobei ein senkrechter Abstand zwischen dem ersten und dem zweiten Formatteilelement verstellbar ist.

US 3 767 027 A offenbart eine Vielzahl von senkrechten Teilern, die über einer sich bewegenden horizontalen Plattform aufgehängt sind, um eine Vielzahl von Reihen länglicher Objekte aufzunehmen, die sich auf der Plattform bewegen. Die Teiler sind derart geformt, dass sie die Reihen trennen, während sie von der Plattform befördert werden, und dann die getrennten Reihen um etwa 45° in einer horizontalen Ebene drehen, um die Reihen von Objekten auf eine zweite horizontale Plattform zu verbringen, die sich senkrecht zu der ersten Plattform bewegt.

Der Abstand zwischen den Teilern kann mittels vor bzw. oberhalb der Teiler angeordneten Pantografen verändert werden.

EP 1 840 051 A1 offenbart ein Formatteil nach dem Oberbegriff des Anspruchs 1. Insbesondere, offenbart das Dokument eine einstellbare Geländervorrichtung für einen Förderweg, auf dem Waren befördert werden können. Die Geländervorrichtung umfasst ein Geländer, das einen Rand des Förderwegs definiert, einen Träger, der das Geländer trägt, und mindestens einen Einstellmechanismus zum lösbaren Einstellen der Position des Geländers in Bezug auf den Träger zum Einstellen des Randes des Förderwegs.

Der Erfindung liegt nun die Aufgabe zu Grunde, eines oder mehrere der oben genannten Probleme zu lösen oder ein gegenüber dem Stand der Technik alternatives Formatteil zum Umlenken von Behältern anzugeben.

Die Erfindung umfasst ein Formatteil nach Anspruch 1 und ein Verfahren zum Verstellen eines Formatteils nach Anspruch 11. Bevorzugte Ausführungsformen sind in den abhängigen Ansprüchen ausgeführt.

Ein erfindungsgemäßes Formatteil ist ausgebildet zum Umlenken von Behältern aus einer ersten Richtung in eine, von der ersten Richtung verschiedene, zweite Richtung. Beispielsweise können erste und zweite Richtung um einen Winkel um 180° voneinander abweichen, oder um 90° oder einen anderen Winkel (ungleich 0°). Behälter können hierbei insbesondere beispielsweise Behälter für Flüssigkeiten, insbesondere beispielsweise Getränkebehälter, wie Getränkeflaschen aus PET, Glas, anderen Kunststoffen und/oder Metall sein oder solche umfassen.

Das erfindungsgemäße Formatteil umfasst einen Kniehebel, der ein Kniegelenk und zwei Fußgelenke umfasst. Am Kniegelenk des Kniehebels ist ein Geländer befestigt, das vom Formatteil umfasst ist, und an dem Behälter entlanggeführt werden können. Typischerweise ist die Verlaufsrichtung des Geländers (verläuft das Geländer) parallel zur Transportrichtung der Behälter, so dass diese das Geländer entlanggeführt werden können, wenn sie transportiert werden, und eine Bewegung in eine Richtung seitlich zur Transportrichtung durch das Geländer verhindert werden kann.

Die Fußgelenke des Kniehebels sind in einer Ebene verschiebbar, die parallel zur Verlaufrichtung des Geländers ist, und wobei durch die Verschiebung der Fußgelenke das Geländer parallel zu dieser Ebene verschiebbar ist.

Beispielsweise kann, z.B. wenn der Behältertransport in horizontaler Richtung erfolgt, das Formatteil so ausgebildet sein, dass die Fußgelenke des Kniehebels in horizontale Richtung verschiebbar sind.

Typischerweise sind beide Fußhebel jeweils gegeneinander und symmetrisch zueinander verschiebbar. Durch diese Verschiebung der Fußgelenke ist das Geländer parallel zu der Ebene verschiebbar, in der die Fußgelenke des Kniehebels verschiebbar sind. Beispielsweise kann, wenn die Fußgelenke des Kniehebels in horizontale Richtung verschiebbar sind, das Geländer ebenfalls in horizontaler Richtung verschiebbar sein.

Durch die Verschiebung des Geländers ist das Formatteil auf verschiedene Behälterformate anpassbar (verstellbar), z.B. kann damit die bei horizontaler Verschiebbarkeit des Geländers die Position des Geländers in horizontale Richtung angepasst werden, so dass breitere oder weniger breite Behälter durch das Formatteil geführt werden können. "In horizontale Richtung verschiebbar" kann hier insbesondere bedeuten, "in einer Richtung verschiebbar, die im montierten Zustand des Formatteils in einer Behälterbehandlungsanlage oder ähnlichen in horizontale Richtung zu liegen kommen".

Die Ebene, in der das Geländer verschiebbar ist, ist parallel zur Ebene, in der Behälter in dem Formatteil befördert werden können, die horizontal ist.

Ein erfindungsgemäßes Formatteil zum Umlenken von Behältern umfasst mehrere Kniehebel und mehrere Geländer. Hierbei kann insbesondere an einem oder mehreren Geländern mehr als ein Kniehebel vorgesehen sein.

Die Geländer können einen geraden Teil und/oder einen gebogenen Teil umfassen. Typischerweise können Geländer, die einen geraden Teil umfassen, an mehr als einem Kniehebel befestigt sein. Geländer, die nur einen gebogenen Teil umfassen, sind typischerweise nur an einem Kniehebel befestigt. "Gerader Teil" und "gebogener Teil" kann hier insbesondere die Form des Geländers bei Draufsicht senkrecht zu der Ebene, in der die Fußgelenke der Kniehebel bewegbar sind, bezeichnen z.B. von oben (in vertikaler Richtung, z.B. wenn das Geländer in horizontaler Richtung installiert ist).

An einem erfindungsgemäßen Formatteil sind an den Fußgelenken des Kniehebels zwei gegenläufige Verstellmechanismen, nämlich Zugmittel, befestigt. Beispielsweise kann an jeden von zwei Fußhebeln eines Kniehebels ein Zugmittel, z.B. eine Kette, ein Band oder ein ähnlicher Verstellmechanismus befestigt sein. Diese Verstellmechanismen sind typischerweise gegenläufig, so dass die Fußgelenke des Kniehebels jeweils achsensymmetrisch zu einer Achse durch das Kniegelenk gegeneinander bewegt werden können.

Insbesondere können diese Verstellmechanismen über die Außenradien des Formatteils geführt sein, z.B. so dass diese möglichst wenig enge Kurven laufen müssen.

Die Verstellmechanismen von Fußgelenken von mehreren Kniehebeln sind gleichzeitig verstellbar ausgebildet. Die Verstellmechanismen von allen der vom Formatteil umfassten Kniehebeln sind so miteinander verbunden, dass diese durch einen einzigen Verstellvorgang (alle gleichzeitig) einstellbar sind. Bei einem Schlitten, der mehrere Formatteile umfasst, können insbesondere die Verstellmechanismen von Fußgelenken von Kniehebeln mehrerer Formatteile, insbesondere die Verstellmechanismen von Fußgelenken von allen im Schlitten umfassten Kniehebeln (d.h. von allen Kniehebeln in den vom Schlitten umfassten Formatteilen), gleichzeitig verstellbar sein. Dies ist vorteilhaft, da das die für einen Formatwechsel notwendige Zeit verringert. Die Kniehebel können durch die Verstellmechanismen optional stufenlos verstellbar sein.

Erfindungsgemäß kann ein Formatteil eine feststehende Führungseinrichtung für Behälter und, gegenüber dieser, das Geländer umfassen. Eine solche Ausführungsform kann vorteilhaft sein, da dann nur eine Teilung des Geländers auf einer Seite erfolgen muss, während die andere Führungseinrichtung für Behälter stationär (feststehend) verbleibt. In anderen Ausführungsformen kann das Formatteil 2 einander gegenüberliegende verstellbare Geländer umfassen, so dass eine Einstellung auf verschiedene Formate von Behältern durch Verstellung der Geländerposition auf beiden Seiten ermöglicht wird. Gegenüberliegend ist hierbei wiederum typischerweise betrachtet parallel zu einer Ebene, in der die Fußgelenke des Kniehebels bewegbar sind, z.B. in horizontaler Richtung. Insbesondere können Behälter zwischen Geländer und Führungseinrichtung entlang ihrer Bewegungsrichtung geführt werden.

Ein nicht erfindungsgemäßes Formatteil kann von einem Schlitten eines Stauförderers umfasst sein oder als solcher ausgebildet sein. In einigen Ausführungsformen kann ein Schlitten eines Stauförderers mehrere Formatteile umfassen. Insbesondere sind solche Schlitten eines Stauförderers typischerweise so ausgebildet, dass sie entlang von, typischerweise parallel angeordneten, Transportbahnen des Stauförderers (optional stufenlos) bewegbar sind. Bei einem Stauförderer können die zu befördernden Behälter typischerweise in Kontakt miteinander stehen, so dass durch Bewegung eines Behälters dieser die anderen Behälter weiterbewegt.

Insbesondere kann ein Stauförderer mehrere parallel verlaufende Transportbänder (oder ähnliche Förderer, die Behälter befördern können, oder glatte Flächen, die eine Beförderung von Behältern erleichtern) umfassen, wobei jeweils zwei direkt nebeneinanderliegende Transportbänder (oder ähnliche Förderer oder glatte Flächen) dazu ausgebildet sind, in gegenläufige Richtungen Behälter zu befördern oder ein Befördern von Behältern zuzulassen. Typischerweise sind die Transportbänder (oder ähnliche Förderer oder glatte Flächen) und Formatteile dazu ausgebildet, Behälter einspurig zu transportieren. Insbesondere kann bei einem Stauförderer ein Teil der Behälterbewegung dadurch erzeugt werden, dass andere Behälter auf die vor ihnen beförderten Behälter drücken.

Durch eine Verschiebung des Schlittens, der Behälter von einem auf das parallel laufende Transportband umleitet, kann die Anzahl der auf dem auf dem Stauförderer befindlicher oder aufnehmbarer Behälter gesteuert werden. Vorteilhaft an solchen einspurigen Stauförderern ist insbesondere, dass die Reihenfolge der ein- und auslaufenden Behältern erhalten bleibt, anders als in anderen Stauförderern, in denen beispielsweise Behälter auf einer Staufläche gesammelt werden und von dort wieder weitergeführt werden.

Ein Schlitten eines Stauförderers kann dazu ausgebildet sein, Behälter von einer Richtung einspurig in eine andere Richtung umzulenken (und somit eine Umlenkeinrichtung (Formatteil) umfassen). In anderen Ausführungsformen kann ein Schlitten eines Stauförderers mehrere Umlenkeinrichtungen (Formatteile) umfassen, die jeweils dazu ausgebildet sind, Behälter einspurig von einer ersten Richtung in eine zweite Richtung umzuleiten. Beispielsweise kann bei einem Stauförderer, der vier oder sechs (oder mehr) einspurige (optional parallele) Bahnen umfasst, ein Schlitten zwei oder drei (oder mehr) Formatteile umfassen, d.h. dazu ausgebildet sein, von zwei oder drei (oder mehr) einspurigen Bahnen die Behälter auf die jeweils danebenliegende Bahn umzulenken.

Typischerweise ist ein Schlitten dabei so ausgebildet, dass er von jeder zweiten Bahn Behälter in eine danebenliegende Bahn umlenkt, also jeweils beispielsweise parallel eintreffende Behälter aus einer ersten Richtung und eine entgegengesetzte zweite Richtung umleiten kann.

Insbesondere können die Verstellmechanismen über eine Verstellhilfe, z.B. ein Handrad oder mit einer automatischen Verstellhilfe, zum Beispiel durch eine Hydraulik, oder einen Servomotor, verstellbar sein. Bei einem Handrad ist dieses typischerweise auch durch eine Hand verstellbar.

Typischerweise sind bei einem erfindungsgemäßen Formatteil die Verstellmechanismen feststellbar, so dass sie nicht aus einer einmal eingestellten Position wieder versehentlich bewegt werden. Eine solche Feststellung der Verstellmechanismen kann zum Beispiel über einen Klemmhebel oder einen Selbststoppmechanismus erfolgen. Bei einem Schlitten, der mehrere Formatteile umfasst, kann für alle Formatteile die Feststellung der Verstellmechanismen gleichzeitig (mit einem oder mehreren Feststellmechanismen) feststellbar sein.

Ein Handrad (oder andere Verstellhilfe), kann von einem Formatteil oder Schlitten umfasst sein. Alternativ kann ein Formatteil oder Schlitten auch ohne Verstellhilfe (z.B. Handrad) ausgebildet sein. In diesem Fall kann sich die Verstellhilfe (z.B. Handrad) zum Verstellen des Formatteils (oder der Formatteile) beispielsweise an der äußersten Position eines Schlittens befinden. Die äußerste Position des Schlittens ist die äußerste Position des Schlittens, in die der Schlitten bewegt werden kann, z.B. in einem Stauförderer die Position, wo die größte Anzahl von Behältern im Stauförderer aufgenommen werden können. In einem erfindungsgemäßen Verfahren kann der Schlitten in die äußerste Position bewegt werden. Dort können dann, z.B. mittels eines Handrades, an einer stationären Verstelleinheit alle Geländer der Formatteile des Schlittens mit nur einem Verstellvorgang verstellt werden. Dies kann beispielsweise durch eine geeignete Umsetzung an der stationären Verstelleinheit des Stauförderers erfolgen, welche z.B. entweder hinter dem Transporttisch oder darunterliegen kann. Es versteht sich, dass auch dort eine andere Verstellhilfe, z.B. automatisch durch Hydraulik oder ein Servomotor Anwendung finden können. Wenn auf ein neues Format umgestellt wurde, kann der Schlitten wieder in eine andere Position gefahren werden, z.B. in die Position, aus der er bewegt wurde oder aber in die Position, die zu dem Zeitpunkt notwendig ist.

Ein Formatteil kann insbesondere ein Verschleißprofil umfassen, das dazu dient, eventuell vorhandene Lücken zwischen einzelnen Geländern insofern zu schließen, als Behälter dann nicht in diese Lücken geraten können. Typischerweise kann es sich hierbei um ein kommerziell erhältliches Verschleißprofil, oder um ein bandförmiges Verschleißprofil, oder ein anderweitig bewegbares und flexibles Material handeln. Das Verschleißprofil kann beispielsweise entlang der Geländer geführt werden. Es kann mit änderbarer Länge ausgebildet sein, z.B. aus einem elastischen Material, oder Reservematerial umfassen, das z.B. an den Seiten des Formatteils vorhanden sein und verwendet werden kann, falls eine größere Länge benötigt wird. Insbesondere kann das Verschleißprofil in Aufnahmen der Geländer (z.B. einem Profil im Geländer) geführt werden oder führbar sein.

Erfindungsgemäß kann jedes Fußgelenk eines Kniehebels in einem Führungsprofil geführt sein. Hierbei können die Fußgelenke direkt in dem Führungsprofil geführt sein oder indirekt, z.B. über Blöcke, an denen die Fußgelenke befestigt sind, wobei die Blöcke in dem Führungsprofil geführt werden. Dadurch können der Bewegungsbereich für die Fußgelenke vorgegeben werden, sowie deren Position stabilisiert werden. Das Führungsprofil kann beispielsweise aus Kunststoff ausgebildet sein. Optional kann das Führungsprofil einen oder mehrere Anschläge für die Kniehebel umfassen, so dass die Bewegungsmöglichkeiten des Kniehebels durch das Führungsprofil festgelegt sind. Beispielsweise kann das Führungsprofil einen Anschlag für die Bewegung der Fußgelenke in Richtung parallel zur Verlaufrichtung des Geländers umfassen. Alternativ oder zusätzlich kann das Führungsprofil die Fußgelenke in einer Richtung senkrecht zur Verlaufrichtung des Geländers formschlüssig führen.

Erfindungsgemäß können die Verstellmechanismen, die beispielsweise Zugmittel sein können, an den Enden des Formatteils über Umlenkräder umgelenkt werden, so dass diese keine allzu engen Kurven umlaufen müssen.

In erfindungsgemäßen Ausführungsformen eines Formatteils können die Kniehebel durch Verstärkungsmittel verstärkt sein, z.B. am Teil des Kniehebels in der Nähe der Fußgelenke.

Nicht zur Erfindung gehörend kann ein Stauförderer vorgesehen sein, der ein oder mehrere Formatteile umfasst, die zuvor beschrieben wurden (und optional in einem, zwei oder mehreren Schlitten umfasst sein können).

Die Erfindung umfasst des Weiteren ein Verfahren zum Verstellen eines zuvor beschriebenen Formatteils. Dieses Verfahren umfasst insbesondere ein Verstellen des Kniehebels, z.B. mittels einer Verstellhilfe, um das Formatteil auf ein anderes Behälterformat einzustellen. Das Verfahren kann des Weiteren alle in diesem Text im Zusammenhang mit einem Formatteil und seiner Verwendung erwähnten Schritte umfassen.

Ausführungsformen und Details werden anhand der folgenden Figuren beschrieben.

Hierbei zeigen
Figuren 1a und 1b schematisch und nicht maßstabsgetreu einen Ausschnitt von einem Formatteil in zwei verschiedenen Positionen;
Figur 2a ein Beispiel für einen Stauförderer;
Figuren 2b und 2c beispielhaft Ausschnitte von einem Schlitten eines Stauförderers;
Figur 2d ein Beispiel eines Stauförderers mit einer stationären Verstellhilfe;
Figur 2e ein Handrad zum Verstellen der Verstellmechanismen;
Figur 3 schematisch einen Ausschnitt aus einem Formatteil;
Figuren 4a und 4b beispielhaft Details eines Formatteils;
Figuren 5a, 5b und 5c beispielhaft Details von möglichen Ausführungsformen eines Formatteils;
Figuren 6a und 6b mögliche Details von Formatteilen; und
Figur 7 einen Ausschnitt aus einem beispielhaften Formatteil.

Die jeweils in den einzelnen Figuren gezeigten Details können alle miteinander kombiniert werden.

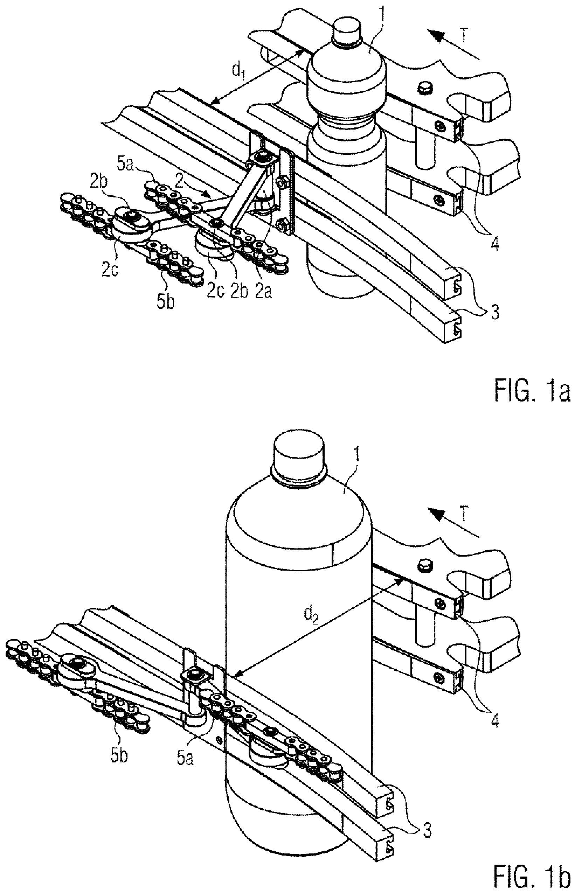

In Figur 1a ist beispielhaft ein Ausschnitt aus einem Formatteil zum Umlenken von Behältern 1 gezeigt. Insbesondere ist hierbei ein Kniehebel 2 mit Fußgelenken 2b und Kniegelenk 2a eingezeichnet.

An dem Kniegelenk 2a befestigt ist Geländer 3, entlang dem Behälter 1 geführt werden können. In dem Beispiel ist nur ein Behälter 1 eingezeichnet, typischerweise werden diese jedoch direkt hintereinander (typischerweise in Kontakt miteinander) entlanggeführt oder können zumindest so entlanggeführt werden. Ebenfalls eingezeichnet ist Führungseinrichtung 4 für Behälter 1, die die Bewegungsrichtung von Behältern auf die gegenüberliegende Seite von dem Geländer 3 begrenzt. Die Führungseinrichtung für Behälter kann feststehend sein (wie gezeigt) oder, in alternativen Ausführungsformen, kann diese ebenfalls beweglich sein, beispielsweise ebenfalls auf Kniehebel angeordnet sein (nicht gezeigt). Behälter 1 können entlang dem Geländer 3, in Transportrichtung T oder entgegengesetzt bewegt werden. Behälter werden dabei typischerweise auf einem Bandförderer, Transportband, einer glatten Fläche oder anderem Förderer bewegt. In einigen Ausführungsformen können die Behälter 1, z.B. auf einer glatten Fläche, (nur) durch den Druck der folgenden Behälter bewegt werden.

Der Kniehebel 2 kann durch Verstellmechanismen 5a und 5b bewegt werden, durch die die Fußgelenke 2b des Kniehebels 2 gegeneinander bewegt werden können. In der gezeigten Ausführungsform sind die Verstellmechanismen 5a und 5b beispielhaft als Zugmittel, hier beispielhaft Ketten, eingezeichnet, die jeweils mit einem Fußgelenk 2b des Kniehebels verbunden sind, wobei die Verbindung optional direkt oder indirekt (z.B. über ein oder mehrere weitere Bauteile) sein kann. Die Fußgelenke 2b sind hier beispielhaft jeweils in einer optional vorhandenen Verdickung 2c angeordnet, durch die die Stabilität der Fußgelenke erhöht sein kann. In anderen Ausführungsformen ist keine Verdickung vorhanden, sondern die Hebelarme behalten ihre Dicke bei. Die optionale Verdickung kann, soweit vorhanden, beispielhaft senkrecht zur Drehachse des Fußgelenks 2b (um das Fußgelenkt herum) angeordnet sein. In Richtung der Drehachse, um die die Fußgelenke drehen, kann eine Verdickung oder keine Verdickung am Kniehebel vorhanden sein.

Durch die Verstellung dieser Verstellmechanismen 5a, 5b und Bewegung der Fußgelenke 2b gegeneinander, kann die Position des Geländers 3 verstellt werden.

In Figur 1a ist beispielhaft eine Einstellung gezeigt, in der das Geländer 3 von der Führungseinrichtung 4 einen Abstand d1 hat.

In Figur 1b ist eine Einstellung von einem System wie in Figur 1a gezeigt, in der die Fußgelenke 2b des Kniehebels 2 auseinander geführt worden sind durch Verstellmechanismen 5a und 5b, so dass das Geländer 3 von der Führungseinrichtung 4 einen Abstand d2 hat, der größer als d1 aus Figur 1a ist. Beispielhaft eingezeichnet ist wieder ein Behälter 1, der in dieser Anordnung befördert werden kann, und breiter ist als Behälter 1 aus Figur 1a.

Die Behältergrößen sind nicht maßstabsgetreu im Vergleich zum Formatteil, sondern nur schematisch eingezeichnet, ebenso wie andere Teile der Figur nicht maßstabsgetreu sein müssen.

In der in Figuren 1a und 1b gezeigten Ausführungsform kann das Geländer 3 einen geraden Teil umfassen, sowie optional einen leicht gebogenen Teil (rechts im Bild) ebenso die Führungseinrichtung 4. Dieser leicht gebogene Teil des Geländers kann den Vorteil haben, dass damit Behälter 1 leichter zwischen Geländer 3 und Führungseinrichtung 4 gebracht werden können. In anderen Ausführungsformen kann das Geländer stärker gebogen sein oder stärker gebogene Geländer umfasst sein, insbesondere in dem Bereich, wo Behälter umgelenkt werden (nicht gezeigt).

Ein Geländer kann wie gezeigt zweiteilig ausgebildet sein (also z.B. einen ersten und zweiten Geländerbalken umfassen), oder einteilig oder mehr als zweiteilig (nicht gezeigt). Es kann an einem Kniehebel über eine zusammenhängende Platte (wie gezeigt) oder ein anderes Bauteil befestigt sein (bei Befestigung an mehreren Kniehebeln kann es an jedem Kniehebel über eine Platte befestigt sein). In alternativen Ausführungsformen mit mehrteiligen Geländern kann jeder Teil des Geländers über ein eigenes Bauteil am Kniehebel befestigt sein. Die beschriebene Ausführung des Geländers kann in jeder der im Folgenden beschriebenen Figuren zu Anwendung kommen.

Die Verstellmechanismen 5a und 5b sind vorteilhaft gegeneinander bewegbar, die möglichen Bewegungsrichtungen sind in Figur 1a und Figur 1b eingezeichnet. Insbesondere kann, wenn die Fußgelenke 2b des Kniehebels 2 sehr nah beieinander sind, durch ein Auseinanderführen selbiger mittels der Verstellmechanismen 5a und 5b das Geländer 3 von der Führungseinrichtung 4 wegbewegt werden. In einer Position, in der die Fußgelenke sehr weit voneinander entfernt sind kann, durch Bewegen der hier beispielhaft als Zugmittel (Ketten) ausgebildeten Verstellmechanismen 5a, 5b in andere Richtung wie in Figur 1b eingezeichnet werden, das Geländer 3 wieder auf Ausführungseinrichtung 4 zu bewegt werden.

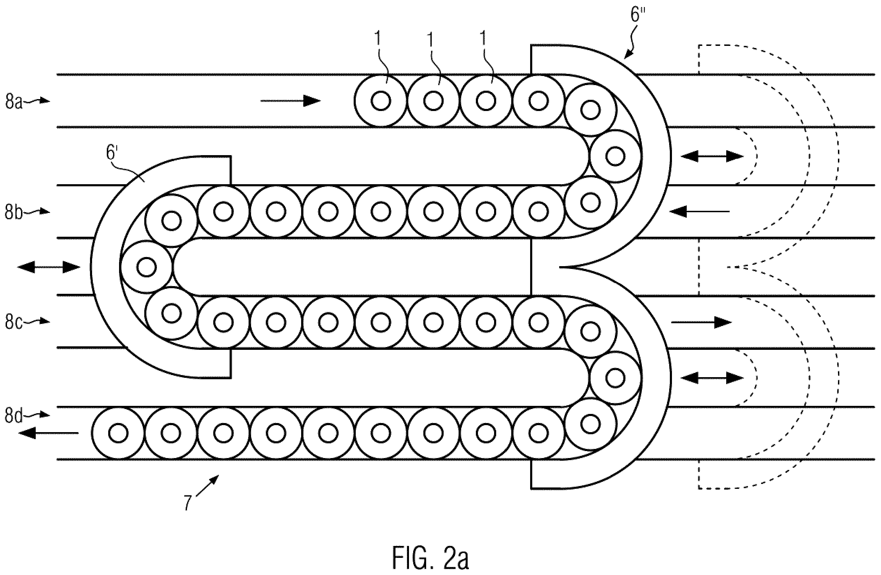

In Figur 2a ist ein Beispiel für ein schematisch Stauförderer 7 gezeigt. Hierbei fasst der Stauförderer beispielhaft vier Transportbahnen 8a, 8b, 8c, 8d. In anderen Ausführungsformen kann er zwei, drei oder mehr als vier Bahnen umfassen (nicht gezeigt). Stauförderer 7 ist dazu ausgebildet, dass auf den Transportbahnen, die jeweils direkt nebeneinander liegen, z.B. 8a und 8b, Behälter jeweils in eine entgegengesetzte Richtung befördert werden können, wobei die Transportbahnen in dem gezeigten Beispiel zueinander parallel sind. Die Behälter 1, von den nur oben drei beispielhaft mit Referenzzeichen versehen sind, werden typischerweise dicht an dicht, also in unmittelbarem Kontakt miteinander befördert. Werden nun Behälter 1 auf Bahn 8a zugeführt, ohne dass aus Bahn 8d (oder der entsprechenden letzten Bahn bei einem Förderer mit weniger oder mehr Transportbahnen) Behälter abgeführt werden können, kann durch Verschiebung der Schlitten 6', 6" in Richtung parallel zu der Beförderungsrichtung von Behältern auf Transportbahnen der Platz für Behälter 1 erhöht werden. Entsprechend kann, wenn Behälter aus Bahn 8d (oder der entsprechenden letzten Transportbahn) auslaufen, während keine weiteren Behälter zugeführt werden, durch Bewegung der Schlitten 6', 6" (die jeweils ein oder mehrere Formatteile umfassen können) der Platz für Behälter verringert werden. In Figur 2a ist beispielhaft gestrichelt eine mögliche weitere Position des Schlitten 6'' zwischen den Transportbahnen 8a und 8b und 8c und 8d eingezeichnet. Entsprechend kann auch Schlitten 6" zwischen Transportbahnen 8b und 8c, und gegebenenfalls weiteren Bahnen bewegt werden. Die Einstellung der Positionen der Schlitten 6', 6" kann zwischen einer innersten Position (die z.B. erreicht werden kann, wenn die Schlitten 6', 6" direkt aneinander liegen, oder wenn der Stauförderer die minimal mögliche Anzahl von Behältern aufnehmen kann) und einer äußersten Position möglich sein (in der möglichst viele Behälter im Stauförderer sein können), wobei die Einstellung der Positionen der Schlitten optional stufenlos erfolgen kann.

In dem gezeigten Beispiel ist Schlitten 6'eingezeichnet, der beispielhaft ein Formatteil umfasst, und Schlitten 6'', der beispielhaft zwei Formatteile umfasst, die dazu ausgebildet sind Behälter 1 einspurig von einer ersten Richtung (auf Transportbahnen 8a, 8c) in eine zweite Richtung (auf Transportbahnen 8b, 8d) umzuleiten. In anderen Ausführungsformen können mehr oder weniger Transportbahnen vorgesehen sein, und Schlitten 6' kann optional mehr als ein Formatteil, z.B. zwei oder drei oder mehr, umfassen und/oder Schlitten 6" kann nur ein oder mehr als zwei, z.B. drei oder mehr Formatteile umfassen (nicht gezeigt). In wieder anderen Ausführungsformen kann ein Stauförderer 7 auch nur einen Schlitten 6'oder 6" umfassen (nicht gezeigt).

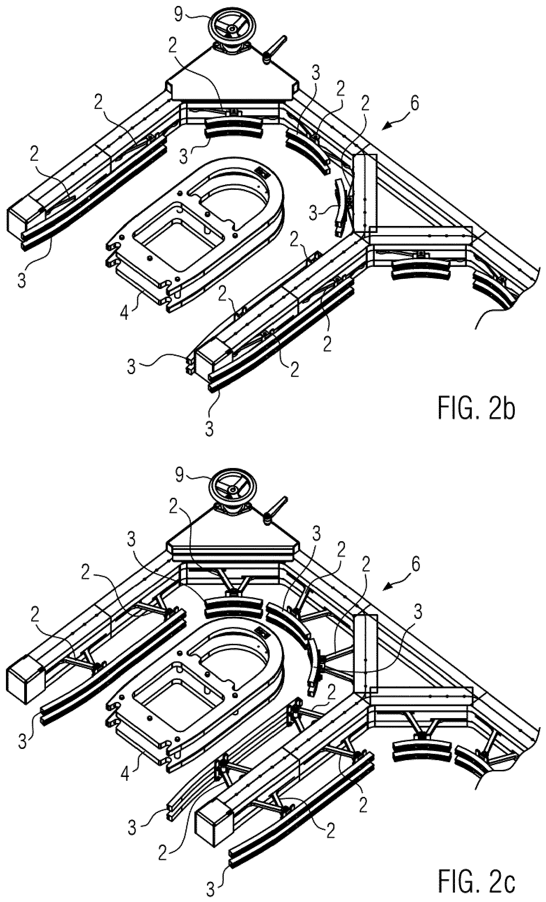

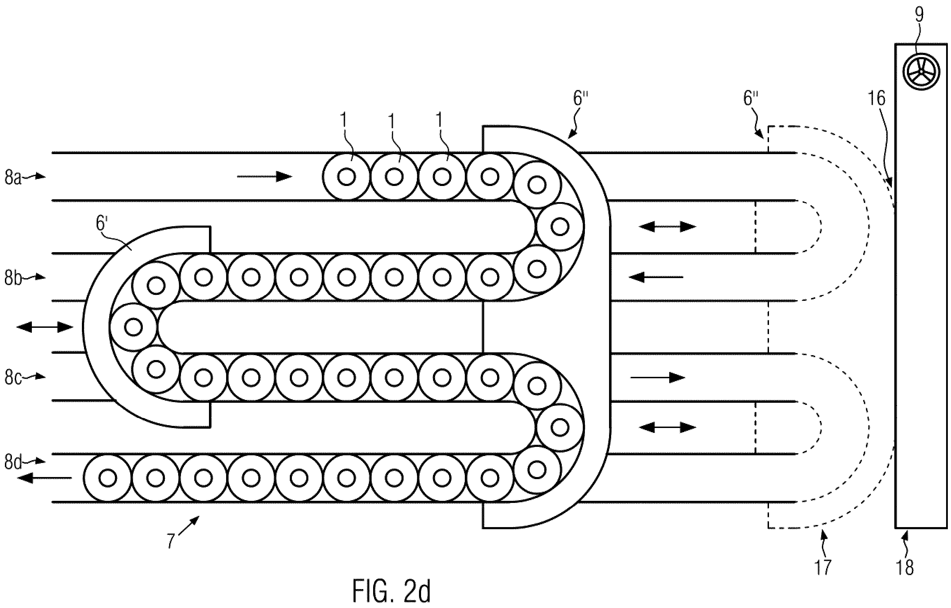

Figuren 2b und 2c zeigen beispielhaft Ausschnitte eines Schlittens 6 und eines Stauförderers 7. Der Details des Schlittens aus Figuren 2b, 2c können beispielsweise Details eines Schlittens 6' und/oder 6" wie in Figur 2a gezeigt, sein. Insbesondere sind in Figur 2b die Kniehebel 2, die Geländer 3 und die Führungseinrichtung 4 von Schlitten 6 eingezeichnet. Ebenfalls eingezeichnet ist beispielhaft ein Handrad 9, mit dem die Verstellmechanismen 5a und 5b (nicht sichtbar in Figur 2d) verstellt werden können.

In dem gezeigten Beispiel ist Führungseinrichtung 4 für Behälter 1, entlang des Innenkreises, feststehend angeordnet und wird, bei Formatwechseln, nicht geändert. Geländer 3 können durch Kniehebel 2 verstellt werden.

In Figur 2b ist eine Einstellung des Schlittens 6 gezeigt, in der breitere Behälter transportiert werden können als in Figur 2c, wo die Kniehebel so eingestellt sind, dass die Fußgelenke 2a relativ nah zueinander sind, so dass der Abstand zwischen Geländer 3 und Führungseinrichtung 4 kleiner als in Figur 2b ist.

In Figuren 2b und 2c ist gezeigt, dass ein Formatteil für Behälter 1 mehrere Geländer umfassen kann, insbesondere in dem gezeigten Beispiel zwei längere Geländer 3, die einander gegenüber liegen und einen geraden Teil, sowie einen leicht gebogenen Teil umfassen (am Zulauf bzw. Ablauf der Behälter in die Umlenkeinrichtung) und jeweils z.B. an zwei Kniehebel befestigt sind, sowie in diesem Beispiel beispielhaft drei gebogene Geländer zum Umlenken der Behälter, die jeweils an einem Kniehebel 2 befestigt sind. In anderen Ausführungsformen können auch andere Geländer 3, insbesondere mehr oder weniger Geländer mit geraden Elementen und/oder mehr oder weniger gebogene Geländer zum Einsatz kommen.

Zwischen den jeweiligen Geländern 3 sind, insbesondere wenn breite Behälter befördert werden, Lücken, die typischerweise durch Verschleißprofile geschlossen werden (in Figuren 2b, 2c nicht gezeigt). Ebenfalls in Figur 2b schematisch eingezeichnet ist, dass ein Schlitten 6 eines Stauförderers 7 nicht nur zum Umlenken von Behältern 1 von einer Bahn auf eine andere Bahn ausgebildet sein kann, sondern optional dazu ausgebildet sein kann, gleichzeitig Behälter von mehreren parallelen Bahnen auf mehrere parallele Bahnen zu leiten. Insbesondere bei Stauförderern mit 4 oder mehr Bahnen können solche Schlitten 6 vorteilhaft einsetzbar sein.

In dem gezeigten Beispiel in Figur 2b ist beispielhaft ein Schlitten 6 eingezeichnet, der Behälter von 2 Bahnen auf 2 weitere Bahnen umlenken kann. Das zweite (in der Figur rechte) Formatteil des Schlittens 6 ist allerdings nur schematisch und mit weniger Details als das linke Formatteil des Schlittens 6 eingezeichnet, da sie hinsichtlich Geländer und Kniehebel typischerweise genauso aufgebaut ist. Lediglich die Verstellhilfe, hier Handrad 9, ist typischerweise nur an einer Stelle eines Schlittens, hier beispielhaft an dem linken Formatteil, vorhanden. In anderen Ausführungsformen kann die Verstellhilfe, z.B. das Handrad, auch nicht vom Schlitten umfasst sein.

Typischerweise sind bei solchen Schlitten 6 für Stauförderer 7 alle Kniehebel 2 über Verstellmechanismen 5a und 5b gleichzeitig verstellbar, wobei typischerweise die Verstellmechanismen 5a, 5b über den Außenradius der Formatteile und/oder des Schlittens laufen (dies vergrößert typischerweise den Kurvenradius, den Verstellmechanismen 5a, 5b laufen müssen und macht sie damit leichtläufiger). Eine gleichzeitige Verstellbarkeit aller Kniehebel kann vorteilhaft sein, da dann durch Betätigung des Handrades 9 (oder alternativ einer anderen Verstellhilfe zum Verstellen der Verstellmechanismen 5a, 5b) gleichzeitig alle Kniehebel 2 angepasst werden können, typischerweise sogar einhändig.

In Figur 2d ist ein Stauförderer 7 mit einer stationären Verstelleinheit 18 eingezeichnet, welcher Behälter 1 wie in der Figur 2a gezeigt transportiert. Falls nun ein breiterer oder schmälerer Behälter transportiert werden soll, können die Schlitten 6'' in die äußerste Position des Stauförderers 17 verfahren. Dort befindet sich die stationäre Verstelleinheit 18, welche über eine Verstellhilfe, hier Handrad 9, und einer Umsetzung 16 alle Formatteile des Schlittens 6" stufenlos verstellen kann. Die Verstellhilfe der stationären Verstelleinheit 18 kann in anderen Ausführungsformen anstatt eines Handrades 9 beispielsweise ein (Servo-) Motor, eine Hydraulik oder eine andere vergleichbare Verstellhilfe zum Verstellen der Verstellmechanismen 5a, 5b über die Umsetzung 16 ein. Die stationäre Verstelleinheit kann unterhalb oder hinter den Transporttisch liegen, so dass die Umsetzung 16 in die Verstellmechanismen 5a und 5b greift. Wenn die Formatteile des Schlittens 6" auf den neuen Behälter eingestellt sind, kann dieser wieder in eine andere Position gefahren werden (z.B. die, die zu dem Zeitpunkt notwendig ist). Eine weitere stationäre Einheit 18 kann optional auch für den Schlitten 6' umfasst sein. Diese kann z.B. am Eingang des Stauförderers unterhalb des Transporttisches angebracht sein. Aus Gründen der Übersichtlichkeit ist diese zeichnerisch nicht dargestellt.

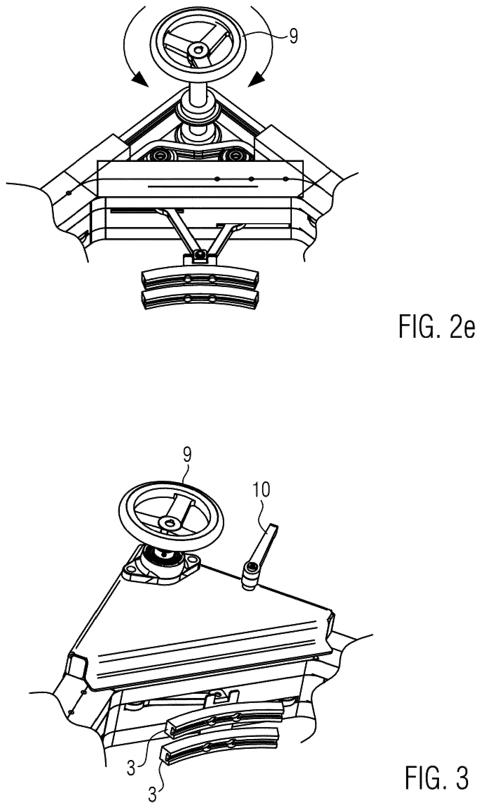

In Figur 2c ist Schlitten 6 in einer Position eingezeichnet, in der die Kniehebel so eingestellt sind, dass dünnere Behälter als in Figur 2b entlang der Geländer 3 und Führungseinrichtung 4 geführt werden können. Eine optional vorhandene zweite (und mehr) Umlenkeinrichtung des Schlittens 6 ist ebenfalls schematisch angedeutet. Figur 2e zeigt einen Ausschnitt aus einem möglichen Formatteil zum Umlenken von Behältern 1 mit einem Handrad 9, das insbesondere dazu ausgebildet sein kann, mit Verstellmechanismen 5a, 5b des gesamten Schlittens oder eines gesamten Formatteils zum Umlenken von Behältern gleichzeitig zu verstellen. Beispielsweise kann durch Drehung des Handrades um ca. 100° eine Verstellung der Kniehebel von der einer ersten Position, in der die Fußgelenke der Kniehebel 2 möglichst nah beieinander sind, in eine zweite Position, in der die Fußgelenke der Kniehebel möglichst weit voneinander entfernt sind, erfolgen.

Natürlich können auch alle Zwischenpositionen eingestellt werden.

Figur 3 zeigt ebenfalls einen Ausschnitt aus einem Formatteil, in dem am Handrad 9 Verstellmechanismen 5a, 5b verstellt werden können (in anderen Ausführungsformen kann statt eines Handrades eine andere Verstellhilfe, z.B. ein (Servo-) Motor, eine Hydraulik oder ein anderes vergleichbares Mittel zur Anwendung kommen). Ebenfalls eingezeichnet ist beispielhaft ein Klemmhebel 10, der ein Verstellen der Verstellmechanismen 5a, 5b nach einem Einstellen in die richtige Position verhindern kann. Beispielsweise kann der Klemmhebel 10 in die Verstellmechanismen 5a, 5b eingreifen oder diese festklemmen. In alternativen Ausführungsformen können auch andere Mittel zum Feststellen der Verstellmechanismen 5a, 5b zum Einsatz kommen.

Ebenfalls beispielhaft sichtbar in Figur 3 ist das Geländer 3 von der im Betrieb den Behältern zugeordneten Seite. In dem Geländer 3 verlaufen hier beispielhaft eingezeichnet Profile, in denen beispielsweise Verschleißprofile (formschlüssig) entlanggeführt werden können. In jeder der gezeigten Figuren kann das Geländer 3 solche Profile umfassen.

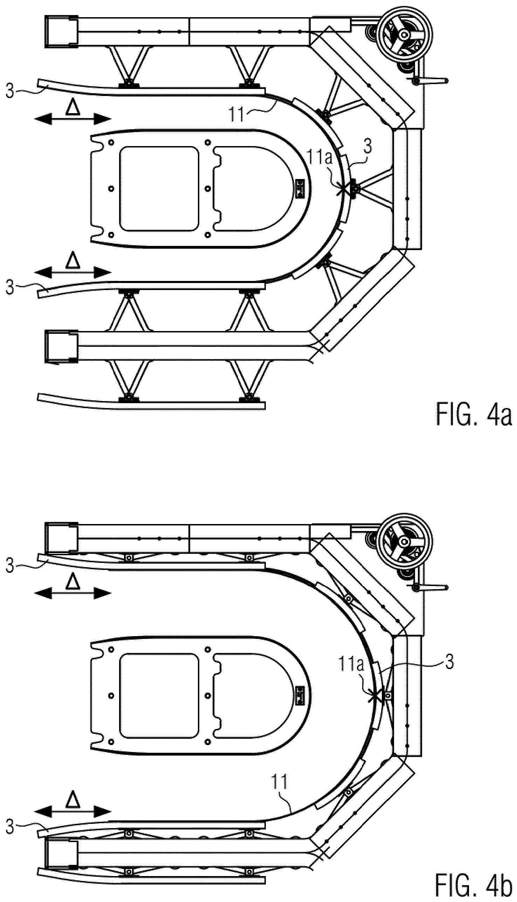

Figuren 4a und 4b zeigen Ausschnitte eines Schlittens, der mehr als ein Formatteil umfasst (hier ist beispielsweise nur ein Ausschnitt des in Figur 2a rechts dargestellten Schlittens 6") gezeigt. In anderen Ausführungsformen, wo der Schlitten 6 nur ein Formatteil umfasst, können die im Bild an der Unterseite eingezeichneten Kniehebel und Geländer nicht vorhanden sein.

In der gezeigten Ausführungsform ist ein Verschleißprofil 11 entlang der Geländer 3 geführt, wobei dies beispielsweise in den Profilen 3, wie in Figur 3 gezeigt, geführt werden kann. Typischerweise sind die Verschleißprofile an mindestens einem Punkt unbeweglich befestigt, beispielsweise an dem mittleren Geländer 3 (am Scheitelpunkt des Formatteils) an dem mit X bezeichneten Punkt. Ebenfalls eingezeichnet ist, dass dieses Verschleißprofil 11, das dazu dient, Lücken zwischen Geländern 3 zu schließen, so dass Behälter 1 nicht von ihrer Bahn abkommen können, in einem Bereich gegenüber den anderen Geländern 3, an dem sie nicht fest befestigt sind, beweglich sind, hier um eine Distanz Δ, so dass beim Verstellen der Kniehebel, das Verschleißprofil 11 immer noch alle Lücken zwischen Geländern 3 verschließt. In Figur 4a ist eine Anordnung gezeigt, in der die Kniehebel 2 so eingestellt sind, dass dünne Behälter befördert werden können, in Figur 4b eine, in der dickere Behälter befördert werden können. Wie in Figur 4b gezeigt, kann das Verschleißprofil 11 beim Verstellen der Kniehebel 2 dann sich gegenüber den Geländern 3, an den es nicht fest befestigt ist, bewegen, hier um die Distanz Δ, so dass Behälter in beiden Situationen durch das Verschleißprofil 11 an den Lücken zwischen Geländern 3 vorbeigeführt werden können. Obwohl in der Draufsicht nur ein Verschleißprofil gezeigt ist und in einigen Ausführungsformen nur ein Verschleißprofil für das ganze Geländer umfasst ist, kann in anderen Ausführungsformen, z.B. bei mehrteiligen Geländern, z.B. zweiteiligen Geländern mit zwei Geländerbalken wie in Figur 1, für die Geländerbalken auf jeweils einer Höhe jeweils ein eigenes Verschleißprofil umfasst sein.

In anderen Ausführungsformen (hier nicht gezeigt,) kann das Verschleißprofil auch elastisch ausgebildet sein oder an den äußeren Geländern 3 elastisch befestigt sein, so dass es, beim Verstellen der Kniehebel 2 immer in der richtigen Position zu liegen kommt. In wieder alternativen Ausführungsformen kann das Verschleißprofil zwar flexibel, aber steif genug sein, dass eine Befestigung an einem Punkt ausreichend ist, und es durch seinen eigenen Gegendruck an den Geländern 3 auch bei Verstellung der Kniehebel immer geeignet zu liegen kommt.

In Ausführungsformen, in denen Schlitten 6 mehr als ein Formatteil umfassen, kann für jede Umlenkeinrichtung ein eigenes Verschleißprofil vorgesehen sein oder ein Verschleißprofil für alle Formatteile.

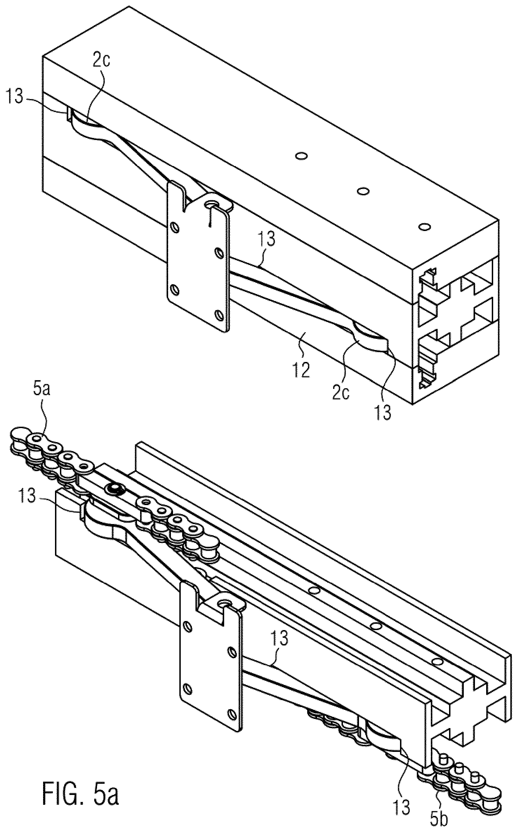

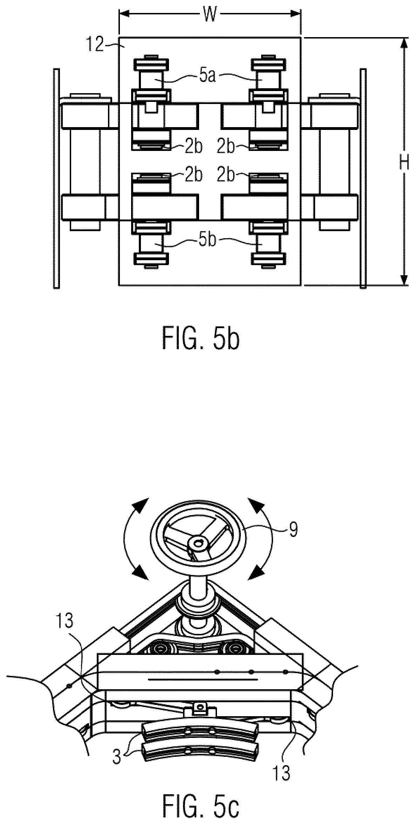

In Figur 5a, 5b und 5c sind beispielhafte Ausschnitte von möglichen Ausführungsformen eines Formatteils gezeigt. Insbesondere ist in Figur 5a ein Führungsprofil 12 für die Fußgelenke 2b (hier mit optionalen Verdickungen 2c) von außen und als Querschnitt gezeigt. Wie in dem gezeigten Beispiel in Figur 5a kann Verdickung 2c und (darüber Fußgelenk 2b) formschlüssig durch das Führungsprofil 12 geführt werden. Ebenfalls eingezeichnet ist beispielhaft ein Verstellmechanismus 5a. Verstellmechanismus 5b am anderen Fußgelenk des Kniehebels ist beim gewählten Betrachtungswinkel in der Figur 5a nicht sichtbar. Verdickung 2c und damit Fußgelenke 2b können formschlüssig in dem Führungsprofil 12 gelagert sein. In anderen Ausführungsformen (nicht gezeigt), kann das Fußgelenk 2b an einem oder mehreren Bauteilen befestigt sein, die formschlüssig durch das Führungsprofil 12 geführt werden (und darin gelagert sind) und damit indirekt Fußgelenk 2b führen. Ebenfalls eingezeichnet sind Anschläge 13 des Führungsprofils, die die Bewegung der Fußgelenke 2a der Kniehebel 2 beschränken.

Figur 5b zeigt einen schematischen Schnitt durch ein solches Führungsprofil 12 senkrecht zur Front, die in Figur 5a gezeigt ist. Allerdings handelt es sich dabei um ein Führungsprofil 12 wie es beispielsweise bei einem Querschnitt durch den mittleren Arm eines Schlittens eines Stauförderers 6"wie in Figur 2a eingezeichnet aussehen würde (also dem Arm zwischen Bahnen 8b, 8c in Figur 2a), an dem von mindestens 2 Bahnen auf mindestens 2 Bahnen Behälter umgelenkt werden, der also auf zwei gegenüberliegenden Seiten Kniehebel 2 und Geländer 3 angeordnet hat. Hierbei ist sichtbar wie Verstellmechanismen 5a und 5b durch die gesamten Führungsprofile laufen und damit Kniehebel 2 verstellen, wobei hier beispielhaft nur die Fußgelenke 2b eingezeichnet sind.

In Figur 5c ist beispielhaft ein Handrad 9 (das in anderen Ausführungsformen auch anderweitig, beispielsweise als Servo-Motor, Hydraulik oder Ähnlichem ausgebildet sein kann) gezeigt, sowie Anschläge 13 zur Begrenzung der Bewegung der Fußgelenke 2b.

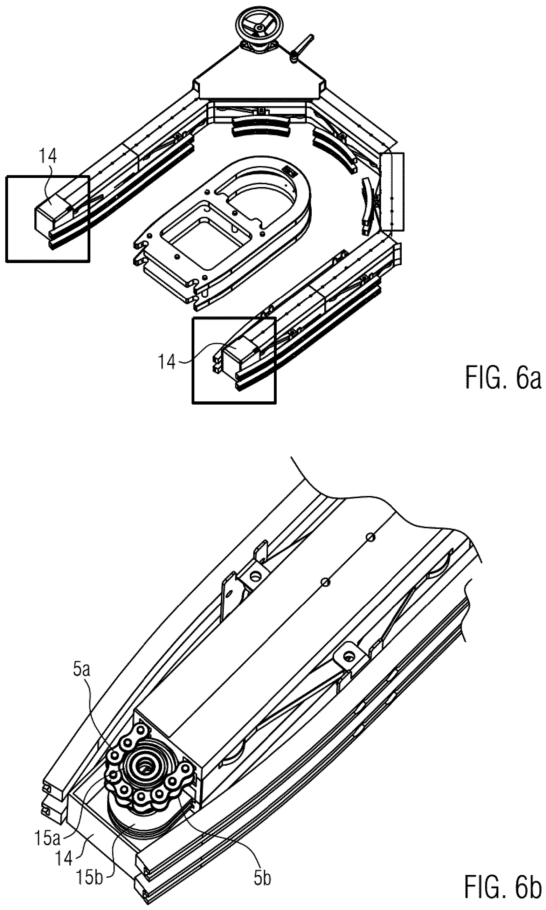

Die Figuren 6a und 6b zeigen mögliche Details eines Formatteils. Hierbei sieht man, wie Verstellmechanismen 5a und 5b an den Enden 14 des Formatteils umgelenkt werden können. Figur 6b zeigt die Verstellmechanismen 5a, 5b an den Enden 14 eines Formatteils teilweise im Querschnitt. Insbesondere können die Verstellmechanismen 5a, 5b an den Enden 14 um Umlenkrollen 15a und 15b geführt werden, so dass die Verstellmechanismen 5a, 5b keine allzu engen Kurven laufen müssen, und besser alle Kniehebel 2 der Formatteile erreichen können.

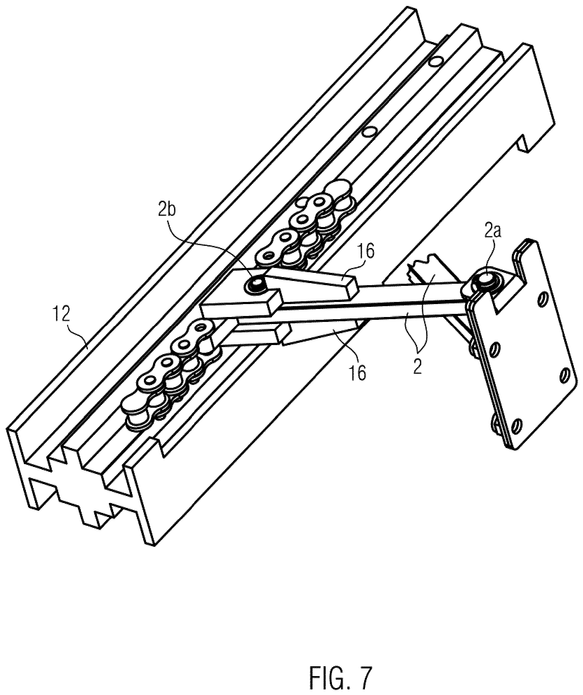

Figur 7 zeigt einen Ausschnitt aus einem beispielhaften Formatteil. Insbesondere erkennbar ist hierbei das Führungsprofil 12, durch das die Fußgelenke 2b jedes Kniehebels 2 mit Kniegelenk 2a indirekt über ein (oder mehrere) weiteres Bauteil geführt werden. Beispielhaft nur für den oberen Hebelarm (oben in der Figur) eingezeichnet sind hier Verstärkungsmittel 16, die dazu dienen, den Hebel zu verstärken. Typischerweise sind solche Verstärkungsmittel 16 nicht nur an aus einem mit Fußgelenk 2b verbundenen Hebelarm, sondern an beiden aus den Fußgelenken 2b verbundenen Hebelarmen angeordnet, so dass ein entsprechendes Verstärkungsmittel auch am anderen Hebelarm ebenso angeordnet wäre. Dies ist hier allerdings zur besseren Sichtbarkeit nicht gezeigt. Eine Anordnung, in der die Fußgelenke 2b eines Kniehebels durch das Führungsprofil 12 indirekt über ein oder mehrere weiter Bauteile geführt werden, kann in allen anderen zuvor beschriebenen Ausführungsformen zum Einsatz kommen. Verstärkungsmittel können ebenfalls optional bei allen zuvor beschriebenen Ausführungsformen vorgesehen sein.

## Patentansprüche

1. Formatteil zum Umlenken von Behältern (1), umfassend einen Kniehebel (2), der ein Kniegelenk (2a) und zwei Fußgelenke (2b) umfasst, wobei das Formatteil ein am Kniegelenk (2a) des Kniehebels befestigtes Geländer (3) umfasst, wobei die Fußgelenke (2b) in einer Ebene verschiebbar sind, die parallel zur Verlaufrichtung des Geländers ist, und wobei durch die Verschiebung der Fußgelenke das Geländer (3) parallel zu dieser Ebene verschiebbar ist, wobei durch die Verschiebung des Geländers (3) das Formatteil für verschiedene Behälterformate anpassbar ist, wobei das Formatteil mehrere Kniehebel (2) und mehrere Geländer (3) umfasst,
wobei eine Ebene, in der das Geländer (3) verschiebbar ist, parallel zur Ebene ist, in der Behälter (1) in dem Formatteil beförderbar sind, die horizontal ist,
**dadurch gekennzeichnet, dass**
an den Fußgelenken (2b) des Kniehebels (2) zwei gegenläufige Verstellmechanismen (5a, 5b), nämlich Zugmittel, befestigt sind,
wobei die Verstellmechanismen (5a, 5b) von Fußgelenken (2b) von mehreren Kniehebeln (2) gleichzeitig verstellbar ausgebildet sind, und
die Verstellmechanismen (5a, 5b) von allen der vom Formatteil umfassten Kniehebel (2) so miteinander verbunden sind, dass diese durch einen einzigen Verstellvorgang einstellbar sind.

2. Formatteil zum Umlenken von Behältern (1) nach Anspruch 1, wobei das Formatteil ein Geländer (3) mit einem geraden Teil und/oder ein Geländer (3) mit einem gebogenen Teil umfasst.

3. Formatteil zum Umlenken von Behältern (1) nach einem der vorhergehenden Ansprüche, wobei das Formatteil eine feststehende Führungseinrichtung (4) für Behälter (3) und, gegenüber dieser, das Geländer (3) umfasst.

4. Formatteil zum Umlenken von Behältern (1) nach einem der vorhergehenden Ansprüche, wobei die Verstellmechanismen über die Außenradien des Formatteils geführt sind.

5. Formatteil zum Umlenken von Behältern (1) nach einem der vorhergehenden Ansprüche, wobei die Verstellmechanismen (5a, 5b) über eine Verstellhilfe, z.B. ein Handrad (9) oder automatisch, verstellbar sind.

6. Formatteil zum Umlenken von Behältern (1) nach einem der vorhergehenden Ansprüche, wobei die Verstellmechanismen (5a, 5b) feststellbar sind, z.B. über einen Klemmhebel (10) oder einen Selbsttoppmechanismus.

7. Formatteil zum Umlenken von Behältern (1) nach einem der vorhergehenden Ansprüche, wobei das Formatteil ein Verschleißprofil (11) umfasst.

8. Formatteil zum Umlenken von Behältern (1) nach einem der vorhergehenden Ansprüche, wobei die Fußgelenke (2b) in einem Führungsprofil (12) geführt sind, das optional aus Kunststoff ist, und wobei optional in dem Führungsprofil (12) ein Anschlag (13) für den Kniehebel (2) umfasst ist.

9. Formatteil zum Umlenken von Behältern (1) nach einem der vorhergehenden Ansprüche, wobei die Verstellmechanismen (5a, 5b) an den Enden (14) des Formatteils über Umlenkräder (15a, 15b) umgelenkt werden.

10. Formatteil zum Umlenken von Behältern (1) nach einem der vorhergehenden Ansprüche, wobei die Kniegelenke durch Verstärkungsmittel (16) verstärkt sind.

11. Verfahren zum Verstellen eines Formatteils nach einem der Ansprüche 1 bis 10, umfassend ein Verstellen von allen der vom Formatteil umfassten Kniehebel (2), um das Formatteil auf ein anderes Behälterformat einzustellen.

## Claims

1. Format part for deflecting containers (1), comprising a toggle lever (2) which comprises a toggle joint (2a) and two ankle joints (2b), wherein the format part comprises a railing (3) fastened to the toggle joint (2a) of the toggle lever, wherein the ankle joints (2b) are displaceable in one plane, which is parallel to the running direction of the railing, and wherein the railing (3) is displaceable parallel to said plane by the displacement of the ankle joints, wherein the format part is adaptable for different container formats by the displacement of the railing (3),
wherein the format part comprises a plurality of toggle levers (2) and a plurality of railings (3),
wherein a plane in that the railing (3) is displaceable is parallel to the plane in which the containers (1) are transportable in the format part nad that is horizontal,
**characterised in that**
two opposing adjustment mechanisms (5a, 5b), namely traction means, are fastened to the ankle joints (2b) of the toggle lever (2),
wherein the adjustment mechanisms (5a, 5b) of ankle joints (2b) of a plurality of toggle levers (2) are simultaneously adjustable, and the adjustment mechanisms (5a, 5b) of all the toggle levers (2) comprised by the format part are connected such to each other that they are adjustable by a single adjustment process.

2. Format part for deflecting containers (1) according to claim 1, wherein the format part comprises a railing (3) with a straight part and/or a railing (3) with a curved part.

3. Format part for deflecting containers (1) according to one of the preceding claims, wherein the format part comprises a fixed guide (4) for containers (3) and, opposite thereto, the railing (3).

4. Format part for deflecting containers (1) according to one of the preceding claims, wherein the adjustment mechanisms are guided over the outer radii of the format part.

5. Format part for deflecting containers (1) according to one of the preceding claims, wherein the adjustment mechanisms (5a, 5b) are adjustable by an adjustment aid, e.g. a handwheel (9) or automatically.

6. Format part for deflecting containers (1) according to one of the preceding claims, wherein the adjustment mechanisms (5a, 5b) are lockable, for example by a clamping lever (10) or a self-stopping mechanism.

7. Format part for deflecting containers (1) according to one of the preceding claims, wherein the format part comprises a wear profile (11).

8. Format part for deflecting containers (1) according to one of the preceding claims, wherein the ankle joints (2b) are guided in a guide profile (12) which is optionally made of plastic, and wherein optionally in the guide profile (12) a stop (13) for the toggle lever (2) is comprised.

9. Format part for deflecting containers (1) according to one of the preceding claims, wherein the adjustment mechanisms (5a, 5b) are deflected at the ends (14) of the format part by deflection wheels (15a, 15b).

10. Format part for deflecting containers (1) according to one of the preceding claims, wherein the toggle joints are reinforced by reinforcing means (16).

11. Method for adjusting a format part according to one of claims 1 to 10, comprising adjusting all of the the toggle levers (2) comprised by the format part to set the format part to another container format.

## Revendications

1. Pièce de format destinée à la redirection de récipients (1), comprenant un levier à genouillère (2) qui comprend une articulation de genouillère (2a) et deux articulations de pied (2b), dans laquelle la pièce de format comprend une rampe (3) fixée à l'articulation de genouillère (2a) du levier à genouillère, dans laquelle les articulations de pied (2b) peuvent être déplacées dans un plan parallèle à la direction d'extension de la rampe, et dans laquelle la rampe (3) peut être déplacée parallèlement audit plan grâce au déplacement des articulations de pied, dans laquelle la pièce de format peut être adaptée à différents formats de récipients grâce au déplacement de la rampe (3), dans laquelle la pièce de format comprend plusieurs leviers à genouillère (2) et plusieurs rampes (3),
dans laquelle un plan dans lequel la rampe (3) peut être déplacée est parallèle au plan
dans lequel des récipients (1) peuvent être transportés dans la pièce de format et qui est horizontal,
**caractérisée en ce que**
deux mécanismes de réglage (5a, 5b) opposés, à savoir des moyens de traction, sont fixés aux articulations de pied (2b) du levier à genouillère (2),
dans laquelle les mécanismes de réglage (5a, 5b) des articulations de pied (2b) sont conçus pour pouvoir être réglés de manière simultanée par plusieurs leviers à genouillère (2), et
les mécanismes de réglage (5a, 5b) de tous les leviers à genouillère (2) compris dans la pièce de format sont reliés entre eux de sorte qu'ils peuvent être ajustés grâce à une seule action de réglage.

2. Pièce de format destinée à la redirection de récipients (1) selon la revendication 1, dans laquelle la pièce de format comprend une rampe (3) avec une partie droite et/ou une rampe (3) avec une partie incurvée.

3. Pièce de format destinée à la redirection de récipients (1) selon l'une quelconque des revendications précédentes, dans laquelle la pièce de format comprend un dispositif de guidage fixe (4) destiné à des récipients (3) et, en face de celui-ci, la rampe (3).

4. Pièce de format destinée à la redirection de récipients (1) selon l'une quelconque des revendications précédentes, dans laquelle les mécanismes de réglage sont guidés sur les rayons extérieurs de la pièce de format.

5. Pièce de format destinée à la redirection de récipients (1) selon l'une quelconque des revendications précédentes, dans laquelle les mécanismes de réglage (5a, 5b) peuvent être réglés par l'intermédiaire d'une aide au réglage, par exemple un volant à main (9) ou de manière automatique.

6. Pièce de format destinée à la redirection de récipients (1) selon l'une quelconque des revendications précédentes, dans laquelle les mécanismes de réglage (5a, 5b) peuvent être bloqués, par exemple par l'intermédiaire d'un levier de serrage (10) ou d'un mécanisme d'arrêt automatique.

7. Pièce de format destinée à la redirection de récipients (1) selon l'une quelconque des revendications précédentes, dans laquelle la pièce de format comprend un profilé d'usure (11).

8. Pièce de format destinée à la redirection de récipients (1) selon l'une quelconque des revendications précédentes, dans laquelle les articulations de pied (2b) sont guidées dans un profilé de guidage (12), qui est de manière optionnelle en plastique, et dans laquelle une butée (13) destinée au levier à genouillère (2) est comprise de manière optionnelle dans le profilé de guidage (12).

9. Pièce de format destinée à la redirection de récipients (1) selon l'une quelconque des revendications précédentes, dans laquelle les mécanismes de réglage (5a, 5b) sont redirigés aux extrémités (14) de la pièce de format par l'intermédiaire de roues de redirection (15a, 15b).

10. Pièce de format destinée à la redirection de récipients (1) selon l'une quelconque des revendications précédentes, dans laquelle les articulations de genouillère sont renforcées par des moyens de renforcement (16).

11. Procédé de réglage d'une pièce de format selon l'une quelconque des revendications 1 à 10, comprenant le réglage de tous les leviers à genouillère (2) compris dans la pièce de format afin d'ajuster la pièce de format à un autre format de récipient.
